(19) Europäisches Patentamt
European Patent Office
Office européen des brevets

(11) Publication number: **0 115 213**
**B1**

(12) **EUROPEAN PATENT SPECIFICATION**

(45) Date of publication of patent specification: **12.08.87**

(51) Int. Cl.$^4$: **C 08 F 220/56,** E 21 B 43/22 // (C08F220/56, 220:54)

(21) Application number: **83307998.1**

(22) Date of filing: **29.12.83**

(54) **A process for forming acrylamide-alkyl acrylamide copolymers.**

(30) Priority: **29.12.82 US 454238**
**29.12.82 US 454280**
**29.12.82 US 454290**

(43) Date of publication of application:
**08.08.84 Bulletin 84/32**

(45) Publication of the grant of the patent:
**12.08.87 Bulletin 87/33**

(84) Designated Contracting States:
**BE DE FR GB IT NL**

(56) References cited:
**DE-B-1 110 422**
**US-A-3 334 072**

(73) Proprietor: **Exxon Research and Engineering Company**
**P.O.Box 390 180 Park Avenue**
**Florham Park New Jersey 07932 (US)**

(72) Inventor: **Bock, Jan**
**500 Juniper Lane**
**Bridgewater New Jersey 08807 (US)**
Inventor: **Siano, Donald Bruce**
**RD No. 2, Box 157D**
**Lebanon New Jersey 08833 (US)**
Inventor: **Kowalik, Ralph Martin**
**880 Country Club Road**
**Bridgewater New Jersey 08807 (US)**
Inventor: **Turner, Sam Richard**
**132 Surrey Hill Way**
**Rochester New York 14623 (US)**

(74) Representative: **Pitkin, Robert Wilfred et al**
**ESSO Engineering (Europe) Ltd. Patents & Licences Apex Tower High Street**
**New Malden Surrey KT3 4DJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to copolymers containing acrylamide.

German Patent Application 1110422 concerns a process for preparing in water and aqueous alcohol solution a copolymer of acrylamide and N-tert-butyl acrylamide in a weight ratio of between 4:6 and 7:3.

The present invention relates to unique and novel copolymers of acrylamide and alkyl acrylamide and the process for forming these copolymers, wherein these copolymers are characterized by the formula:

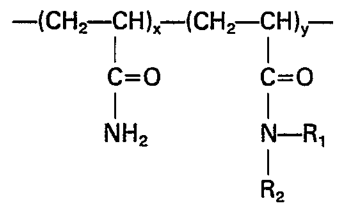

wherein $R_1$ is a $C_6$ to $C_{22}$ straight chained or branched alkyl or cycloalkyl group, more preferably $C_6$ to $C_{20}$, and most preferably $C_6$ to $C_{18}$; $R_2$ is the same or different $C_6$ to $C_{22}$ alkyl group as $R_1$, or hydrogen; x is 90.0 to 99.9 mole %, preferably 95.0 to 99.8; and more preferably 97.0 to 99.5; y is 0.1 to 10.0, preferably 0.2 to 5.0, and more preferably 0.2 to 3.0. The copolymers of this invention are excellent viscosifiers for the modification of the viscosity of aqueous and saline solutions as exemplified by the preferred embodiments of the present invention. The present polymers are also excellent drag reduction agents for aqueous and saline solutions.

The invention further relates to a free radical microemulsion copolymerization process for the formation of the copolymers defined above, which process comprises the steps of:

(a) forming a solution of a surfactant, an alcohol and an alkane solvent;

(b) adding alkyl acrylamide monomer to the solution from step (a);

(c) forming a deaerated reaction solution from the solution from step (b) by adding thereto acrylamide monomer, and deaerated water under nitrogen;

(d) adding to the reaction solution from step (c), at a temperature of at least 50°C, a sufficient quantity of initiator to initiate copolymerization of said acrylamide monomer and said alkyl acrylamide monomer in said reaction solution; and

(e) copolymerizing said acrylamide monomer and said alkyl acrylamide monomer in said reaction solution for a sufficient period of time and at a temperature of 25° to 90°C to form said copolymer.

In copending European Patent Application No. 83307999.9 (EP—A—0 115 703) there is described another copolymerization process for the formation of the said hereinabove defined copolymers, which process is an homogeneous, micellar, free radical copolymerization process comprising the steps of:

(a) forming a mixture of sodium dodecyl sulphate or other suitable surfactant, acrylamide monomer and alkyl acrylamide monomer under a nitrogen atmosphere;

(b) adding deoxygenated water to said mixture from step (a) to form a reaction solution;

(c) adding to the reaction solution from step (b), at a temperature of at least 50°C, a free radical initiator to said reaction solution to initiate polymerization of said acrylamide monomer and said alkyl acrylamide monomer; and

(d) copolymerizing said acrylamide monomer and said alkyl acrylamide monomer at a temperature of 0° to 70°C and for a sufficient period of time to form said copolymer.

In the drawings:

Figure 1 illustrates a plot of reduced viscosity versus concentration for acrylamide/dodecyl acrylamide copolymers.

Figure 2 illustrates a plot of reduced viscosity versus concentration of acrylamide/dodecyl acrylamide copolymers and the effect of salt thereupon.

Figure 3 illustrates a plot of reduced viscosity versus concentration for acrylamide/octyl acrylamide.

Figure 4 illustrates a plot of reduced viscosity versus concentration of acrylamide/octyl acrylamide copolymers and the effect of salt thereupon.

The viscosifying agents for aqueous and saline solutions of the present invention are copolymers formed by the above defined microemulsion, free radical copolymerization reaction. The water soluble copolymers thereby produced have the formula given previously and typical, but nonlimiting examples of preferred alkyl groups are hexyl, octyl, decyl, dodecyl and stearyl groups.

The viscosities of these solutions were measured by means of a Contraves™ low shear viscometer model LS30 using a No. 1 cup and No. 1 bob. Temperatures were controlled to ±0.1°C, and measurements were made at a rotational speed that gave a shear rate of $1.28s^{-1}$. The concentration dependence of the solutions are plotted in Figure 1 for different mole fractions of dodecyl acrylamide. As the mole fraction of hydrophobic dodecyl acrylamide is increased in the copolymers, the specific viscosity per unit mass of polymer also increases. An important feature demonstrated by these data is that the intercepts at zero concentration are independent of the mole fraction of dodecyl acrylamide. This intercept is the intrinsic viscosity, defined as:

$$[\eta] \equiv \lim_{c \to o} \left( \frac{\eta - \eta_o}{\eta_o c} \right)$$

where $\eta_o$ is the viscosity of the solvent, $\eta$ is the measured viscosity of the solution with a concentration of polymer c. This intrinsic viscosity is related to the molecular parameters for a homopolymer by:

$$[\eta] = 2.5\ NA \frac{V_h}{M_w}$$

where $N_A$ is the Avagadro number, $M_w$ is the polymer molecular weight and $v_h$ is the hydrodynamic volume. For copolymers with a repeating backbone unit, the hydrodynamic volume is given by:

$$vh = \frac{4\pi}{3} \xi^3 R_G^3$$

where $R_G$ is the radius of gyration of the polymer, and $\xi$ is a dimensionless constant with a theoretical value of 0.875 for polymer having a random chain conformation.

The radius of gyration is given by:

$$R_G = \beta v^{0.6}$$

where $\beta$ is an effective bond length and v is the degree of polymerization. The molecular weight of a copolymer with a mole fraction 1–y of acrylamide ($M_w$=71) and dodecyl acrylamide ($M_w$=239) is given by:

$$M_w = [(1-y)71 + 239y]v$$

or

$$M_w = (71 + 168y)v$$

so

$$[\eta] = \frac{10\pi}{3} \cdot N_A \beta^3 \xi^3 \cdot \frac{v0.8}{71 + 168_y}$$

This formula permits one to compare intrinsic viscosities for acrylamide/dodecyl acrylamide copolymers in a simple way. For example, the copolymer with x=0.98 can be compared with the homopolymer, which has x=1.0:

$$\frac{[\eta]_{0.98}}{[\eta]_{1.0}} = \left[ \frac{v_{0.98}}{v_{1.0}} \right]^{0.8} \frac{71 + 168}{71 + 168(0.98)} = 1.01 \left[ \frac{v_{0.98}}{v_{1.0}} \right]^{0.8}$$

Thus, if the degree of polymerization for the two polymers are the same, their intrinsic viscosities should differ by only one percent. Conversely, if the intrinsic viscosities of the two polymers differ by only a few percent, then we may infer that their degrees of polymerization are nearly the same. Figure 1 therefore shows that the degree of polymerization of the copolymers and homopolymer are very nearly all equal, and that introduction of the dodecyl acrylamide produces a beneficial enhancement in viscosity.

Suitable surfactants used in forming the surfactant solution are Tween-60 (ICI Americas), sodium oleate, sodium laurate, ethylene oxide, propylene oxide copolymers (Pluronics), and olyelhexylate. Tween-60 is a polyoxyethylene-20-Sorbitan Monostearate having the formula:

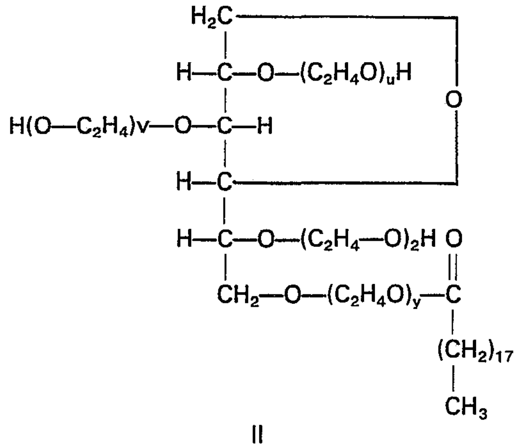

II

Polyoxyethylene 20-Sorbitan Monostearate

wherein u+v+y+z=20.

The words 'Tween' and 'Pluronics' are registered Trade Marks

Suitable alcohols which may be used in forming the surfactants solution are n-pentanol, isopropyl alcohol. Suitable N-alkane solvents used are octane, hexadecane, dodecane, decane and hexane. The concentration of alcohol is preferably 20 to 40 wt.% of the surfactant solution, the concentration of the n-alkane solvent is preferably 1 to 10 wt.% of the surfactant solution, and the concentration of the surfactant is preferably 30 to 80 wt.%. The selection of the proper surfactant to use in the polymerization reaction is dependent upon the alcohol and n-alkane solvent used in the polymerization reaction.

Suitable alkyl or N,N-dialkyl acrylamide monomers useful in the preparation of the copolymers of the present invention are alkyl acrylamides having an alkyl group having 6 to 22 carbon atoms, more preferably 7 to 20; and most preferably 8 to 18. Typical, but nonlimiting examples are hexyl acrylamide, octyl acrylamide, decyl acrylamide, dodecyl acrylamide stearyl acrylamide, and N,N-dioctyl acrylamide.

Suitable free radical initiators for the present free radical-copolymerization process are potassium persulfate, sodium thiosulfate/potassium persulfate mixture; benzoylperoxide and other common free radical initiators. The concentration of the free radical initiator, preferably is 0.01 to 0.50 grams per 100 grams of acrylamide monomer and alkyl acrylamide-monomer.

Polymerization of the acrylamide monomer and alkyl acrylamide monomer is effected at a temperature of 25 to 90°C, more preferably at 30 to 65°C, and most preferably at 45 to 55°C for a period of 1 to 48 hours, more preferably at 2 to 36, and most preferably at 4 to 24.

A suitable method for recovery of the formed copolymer from the reaction solution comprises precipitation into acetone.

The following examples illustrate the present invention.

Example 1

Preparation of N-(n-octyl acrylamide)

A 500 ml., 4 necked round bottom flask was equipped with a condenser, thermometer, $N_2$ inlet, magnetic stir bar and dropping funnel. After purging with $N_2$, the n-octylamine, 14.35 g (0.11 mol.) and triethylamine, 12.35 g. (0.41 mol.) were mixed with 50 ml. of toluene and added to the flask. Acryloyl chloride, 10 g. (0.11 mol.) was dissolved in 50 mol. of toluene and added to the dropping funnel. The reaction is exothermic so the temperature was controlled via an ice bath. The acryloyl chloride was added dropwise so that the contents of the flask stayed below 40°C. The resulting slurry was stirred for an additional hour and then filtered to remove the triethylamine hydrochloride. The filtrate was stripped in a rotary evaporator (removal of toluene). The resulting oil was taken up into 240 ml. of acetone and then cooled to −70°C in a dry ice bath. The monomer crystals were filtered on a coarse filter under $N_2$ and then vacuum dried at room temperature for one day. A yield of 14.3 g. (~70%) of white crystals was obtained. A melting range of 36 to 37°C was observed. The monomer appeared to soften on extended storage at room temperature.

Example 2

Preparation of N-(n-dodecyl acrylamide)

Same procedure as in Example 1 except 20.36 g. (0.11 mol.) of n-dodecylamine was substituted for the n-octylamine.

Example 3

Acrylamide/dodecylacrylamide//99/1 mole percent in Tween-60 microemulsion

To carry out the polymerization, 25g of the surfactant mixture comprising 15.85g of Tween-60, 8.15g of

n-pentanol and 1.0g of hexadecane (ex water) was prepared and 0.5g of dodecyl acrylamide was added. A clear mixture resulted. This was placed in the reactor and then 460 ml of deaerated water was added under $N_2$ and 14.69g of acrylamide was added. After mixing, the solution was still water-clear, comparable in clarity to the Tween-60 microemulsion itself without added comonomers. The initiator, consisting of potassium persulfate (0.01g) was added when the temperature reached 50°C. The temperature was maintained for 24 hours. The resulting mixture became slightly hazy and slightly foamy. The polymer was recovered by precipitation into acetone and it was redissolved into water. A much lower level of microgel was found to be present compared to that found in Example 4.

Example 4

Acrylamide/dodecyl acrylamide//98/2 in Tween-60 microemulsion

This polymerization was carried out in the same manner as Example 3, except that 1.0g (2 mole %) of dodecyl acrylamide was used to make a somewhat more hydrophobic polymer. The reaction product was similar in appearance to Example 3 and had a similar low microgel content. The reaction product did not phase separate and was macroscopically homogeneous. However, when the polymer was separated from the surfactant by repeated acetone precipitation, the product was not completely soluble in water. Approximately 40% of a 1% solution in water contained in a test-tube formed a swollen, turbid gel in the bottom of the tube. A sample of the same polymer added to the Tween-60 microemulsion at the same concentration, however, formed a uniform, slightly turbid phase.

A comparison of copolymers from examples 3 and 4

A feature which distinguishes the microemulsion polymerization technique is the relative uniformity of the resulting product. Microgel formation is one indication of the uniformity of the product solution.

Relative amounts of microgel were qualitively assessed by determining the volumes of polymer solutions (with a concentration of 0.5 wt.%) that could pass through a Nucleopore™ polycarbonate filter which was 13 mm in diameter and had a pore size of 5 µm. The water-polymerized copolymer plugged the filter after only 6 $cm^3$ of solution passed through it, while the Tween 60 microemulsion polymerized copolymer was able to pass 28 $cm^3$ of water before plugging. Thus, the microemulsion polymerization technique provides a product that produces a more uniform polymer solution.

One method for ascertaining the incorporation of hydrophobic groups in a water soluble polymer structure involves solubilization of a hydrophobic material which is normally insoluble in the aqueous phase. The solubilization properties of the two copolymers were compared by measuring the saturation uptake of an oil soluble dye into a 0.5 wt.% solution of the copolymer. The absorption in a one cm cell at 485 nm was $0.424\pm0.007$ for the microemulsion polymerized copolymer and $0.0795\pm0.005$ for the copolymer made in the absence of microemulsion. This latter value is indistinguishable from the absorption of water saturated with dye. This is evidence that the water polymerized product of Example 4 did not incorporate the hydrophobic dodecyl acrylamide, while the microemulsion polymerized products of Example 4 did incorporate dodecyl acrylamide.

Example 5

Acrylamide/dodecyl acrylamide copolymers

Copolymers of acrylamide and dodecyl acrylamide were prepared, according to the procedure of Example 3, with different mole fractions of dodecyl acrylamide, y, that were initially contained in the polymerization vessel. These copolymers were isolated, purified and redissolved in water to give solutions with known concentrations. The viscosities of these solutions were measured by the previously described method.

Figure 1, therefore, shows that the degree of polymerization of the copolymers and homopolymer are very nearly all equal, and that introduction of the dodecyl acrylamide produces a beneficial enhancement in viscosity.

Values for the reduced viscosities of some of these systems are shown in Table I at a polymer concentration of one percent, in water and also in a two percent sodium chloride solution. These data show that the viscosities are not lowered by the salt. This is also illustrated in Figure 2, which shows that the relative salt independence is not a function of polymer concentration. This salt independence of the copolymers sharply contrasts with that exhibited by the well-known acrylamide/acrylic acid copolymers.

TABLE I
Alkyl acrylamide-acrylamide copolymer compositions and reduced viscosities

| RAM | AM (Mol.%) | $\eta_{SP}/C$ (dl/g)[a] | $\eta_{SP}/C$ (2% salt) (dl/g)[a] |
|---|---|---|---|
| — | 100 | 5.2 | — |
| $C_{12}$ | 99.5 | 7.8 | 8.4 |
| $C_{12}$ | 99.0 | 18.4 | 16.5 |
| $C_{12}$ | 98.0 | 32.1 | 34.7 |
| $C_{12}$ | 80.0 | —[b] | —[b] |
| $C_8$ | 99.5 | 8.3 | 8.5 |
| $C_8$ | 99 | 18.3 | 19.7 |
| $C_8$ | 98 | 308 | 306 |

[a]At 1% polym. concn.
[b]Insoluble in $H_2O$.

Example 6
Acrylamide/octyl acrylamide copolymers

Copolymers of acrylamide/octyl acrylamide were prepared according to the procedure of Example 3. Figure 3 gives results for their reduced viscosity as a function of concentration in aqueous solutions for the formed copolymers. These plots clearly demonstrate the improved thickening efficiency resulting from the introduction of a small mole fraction of octyl acrylamide into the polymer. The salt independence of the viscosity is also shown in Table I. Plots with and without 2% salt are compared in Figure 4 for the 98/2 acrylamide/octyl acrylamide copolymer.

Example 7
Drag reduction of novel copolymers

Drag reduction effectiveness was evaluated by flowing polymer/distilled water solutions through a 2.13 mm inside diameter stainless steel tube and measuring the resulting frictional pressure drop. Flows were generated by first loading a bladder accumulator with a previously dissolved polymer/distilled water solution and then discharging the solution through the tube test section. The bladder accumulator used (Greer-Olaer Model 30A—2-1/2 is a 10l pressure vessel which contains an inflatable rubber bladder, a port for loading and discharging gas from the inside of the bladder and a port for loading and discharging liquid solutions from the space between the bladder and the interior vessel walls. To load the vessel with liquid, the bladder was first expanded with nitrogen gas such that the bladder filled the inside of the vessel. The liquid solution was then siphoned into the vessel as the bladder was evacuated. Subsequent charging of the vessel with nitrogen gas produced a flow of liquid which was directed to the 2.13 mm diameter tube. Pressure drops were measured across a 48 cm straight segment of the tube with a pair of flush mounted tube wall pressure taps and a differential pressure transmitter. Flow rates were measured by weighing samples of the effluent liquid collected over measured time periods.

Flow rates in the drag reduction experiments ranged from about 8 to 20 g/s; these correspond to solvent Reynolds numbers from about 5000 to 13000 (solvent Reynolds number=mean flow velocity×tube diameter+solvent kinematic viscosity). Drag reduction was measured by comparing pressure drops of the polymer/distilled water solutions with pressure drops of the distilled water solvent at equal flow rates. Results were expressed as percent drag reduction which is defined as follows:

$$\text{Percent drag reduction} = \frac{\text{Pressure drop (solvent)} - \text{Pressure drop (solution)}}{\text{Pressure drop (solvent)}}) \times 100$$

Typical drag reduction results from experiments with several novel acrylamide copolymer solutions are given in Table I. Significant drag solution was observed for all listed solutions. Each solution contained 89 parts per million (by weight) of polymer.

TABLE I
Drag reduction data

| Sample | Hydrophobe Type | Hydrophobe Level (mole %) | Solvent Reynolds number | Drag reduction (%) |
|---|---|---|---|---|
| 1 | $C_8$ | 1.5 | 10,300 | 20 |
| 2 | $C_8$ | 1.0 | 10,500 | 37 |
| 3 | $C_8$ | 0.75 | 10,300 | 47 |
| 4 | $C_8$ | 0.5 | 10,400 | 33 |
| 5 | $C_{12}$ | 0.5 | 10,500 | 51 |
| 6 | $C_8$ | 0.25 | 10,500 | 52 |

**Claims**

1. A free radical microemulsion copolymerization process for the formation of a copolymer of acrylamide and a water soluble alkyl acrylamide having the formula:

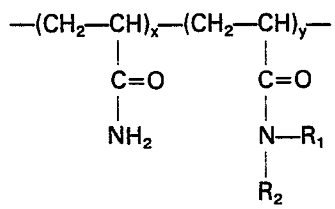

wherein $R_1$ is an alkyl or cycloalkyl group having 6 to 22 carbon atoms, $R_2$ is the same or different $C_6$ to $C_{22}$ alkyl group as $R_1$, or hydrogen, x is 90.0 to 99.9 mole %, and y is 0.1 to 10.0 mole %, which comprises:

(a) forming a solution of a surfactant, an alcohol and an alkane solvent;

(b) adding alkyl acrylamide monomer to the solution from step (a);

(c) forming a deaerated reaction solution from the solution from step (b) by adding thereto acrylamide monomer, and deaerated water under nitrogen;

(d) adding to the reaction solution from step (c), at a temperature of at least 50°C, a sufficient quantity of initiator to initiate copolymerization of said acrylamide monomer and said alkyl acrylamide monomer in said reaction solution; and

(e) copolymerizing said acrylamide monomer and said alkyl acrylamide monomer in said reaction solution for a sufficient period of time and at a temperature of 25° to 90°C to form said copolymer.

2. A process according to claim 1 which includes the recovery of said copolymer from said reaction solution.

3. A process according to either of claims 1 and 2 wherein $R_1$ is an alkyl group having about 6 to 18 carbon atoms.

4. A process according to any one of the preceding claims wherein x is 95.0 to 99.8 mole % and y is 0.2 to 5.0 mole %.

5. A copolymer having the formula:

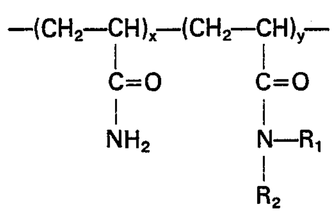

wherein $R_1$ having 6 to 22 carbon atoms, is an alkyl group, straight chained or branched or cycloalkyl group, $R_2$ is the same or different $C_6$ to $C_{22}$ alkyl group as $R_1$ or is hydrogen, x is 90.0 to 99.9 mole %, and y is 10 to 0.1 mole %.

6. A copolymer according to claim 5, wherein $R_1$ is an alkyl group having 6 to 20 carbon atoms.

7. A copolymer according to claim 6 wherein $R_1$ is an alkyl group having 6 to 18 carbon atoms.

8. The use of the copolymer according to any one of claims 5 to 7 as a drag reduction agent.

**Patentansprüche**

1. Freiradikalisches Mikroemulsions-Copolymerisationsverfahren zur Bildung eines Copolymeren aus Acrylamid und einem wasserlöslichen Alkylacrylamid mit der Formel

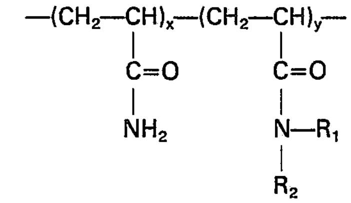

in der $R_1$ eine Alkyl- oder Cycloalkylgruppe mit 6 bis 22 Kohlenstoffatomen ist, $R_2$ dieselbe oder eine andere $C_6$—$C_{22}$-Alkylgruppe wie $R_1$ oder Wasserstoff ist, x 90,0 bis 99,9 Mol% ist und y 0,1 bis 10,0 Mol% ist, dadurch gekennzeichnet, daß man

(a) eine Lösung eines Tensids, eines Alkohols und eines Alkanlösungsmittels bildet,

(b) der Lösung gemäß Stufe (a) ein Alkylacrylmonomer zusetzt,

(c) aus der Lösung aus Stufe (b) eine entlüftete Reaktionslösung herstellt, indem man ihr unter Stickstoff Acrylamidmonomer und entlüftetes Wasser zusetzt,

(d) zu der Reaktionslösung aus Stufe (c) bei einer Temperatur von mindestens 50°C eine ausreichende Menge eines Initiators gibt, um die Copolymerisation des Acrylamidmonomeren und des Alkylacrylamidmonomeren in der Reaktionslösung einzuleiten, und

(e) das Acrylamidmonomer und das Alkylacrylamidmonomer in der Reaktionslösung über einen ausreichend langen Zeitraum und bei einer Temperatur von 25 bis 90°C zur Bildung des Copolymeren copolymerisiert.

2. Verfahren nach Anspruch 1, dadurch gekennzeichnet, daß man das Copolymer aus der Reaktionslösung gewinnt.

3. Verfahren nach Anspruch 1 oder 2, dadurch gekennzeichnet, daß $R_1$ eine Alkylgruppe mit 6 bis 18 Kohlenstoffatomen ist.

4. Verfahren nach einem der vorangehenden Ansprüche, dadurch gekennzeichnet, daß x 95,0 bis 99,8 Mol% und y 0,2 bis 5,0 Mol% ist.

5. Copolymer mit der Formel:

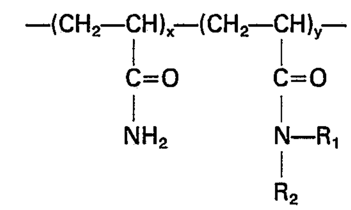

in der $R_1$ 6 bis 22 Kohlenstoffatome besitzt und eine geradkettige, verzweigtkettige oder Cycloalkylgruppe ist, $R_2$ die gleiche oder eine andere $C_6$—$C_{22}$-Alkylgruppe wie $R_1$ oder Wasserstoff ist, x 90,0 bis 99,9 Mol% ist und y 10 bis 0,1 Mol% ist.

6. Copolymer nach Anspruch 5, dadurch gekennzeichnet, daß $R_1$ eine Alkylgruppe mit 6 bis 20 Kohlenstoffatomen ist.

7. Copolymer nach Anspruch 6, dadurch gekennzeichnet, daß $R_1$ eine Alkylgruppe mit 6 bis 18 Kohlenstoffatomen ist.

8. Verwendung des Copolymeren nach einem der Ansprüche 5 bis 7 als Widerstandsverringerungsmittel.

**Revendications**

1. Procédé de copolymérisation radicalaire en microémulsion de formation d'un copolymère d'acrylamide et d'un alkylacrylamide soluble dans l'eau, ayant la formule:

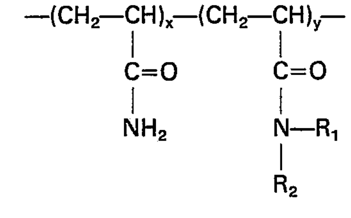

dans laquelle $R_1$ est un groupement alkyle ou cycloalkyle ayant 6 à 22 atomes de carbone, $R_2$ est le groupement alkyle en $C_6$ à $C_{22}$ identique à $R_1$ ou différent, ou un hydrogène x est 90,0 à 99,9% en moles, et y est 0,1 à 10,0% en moles, ce procédé comprenant:

(a) la formation d'une solution d'un tensioactif, d'un alcool et d'un solvant alcane;

(b) l'addition d'un monomère alkylacrylamide à la solution provenant de l'étape (a);

(c) la formation d'une solution réactionnelle purgée d'air à partir de la solution provenant de l'étape (b), par addition à cette dernière d'un monomère acrylamide, et d'eau purgée d'air sous azote;

(d) l'addition à la solution réactionnelle provenant de l'étape (c), à une température au moins égale à 50°C, d'un initiateur en quantité suffisante pour amorcer la copolymérisation dudit monomère acrylamide et dudit monomère alkylacrylamide dans ladite solution réactionnelle; et

(e) la copolymérisation dudit monomère acrylamide et dudit monomère alkylacrylamide dans ladite solution réactionnelle pendant un temps suffisant et à une température de 25° à 90°C pour former ledit copolymère.

2. Procédé selon la revendication 1, comprenant la récupération dudit copolymère de ladite solution réactionnelle.

3. Procédé selon l'une quelconque des revendications 1 et 2, dans lequel $R_1$ est un groupement alkyl ayant d'environ 6 à 18 atomes de carbone.

4. Procédé selon l'une quelconque des revendications précédentes, dans lequel x est 95,0 à 99,8% en moles et y est 0,2 à 5,0% en moles.

5. Copolymère ayant la formule:

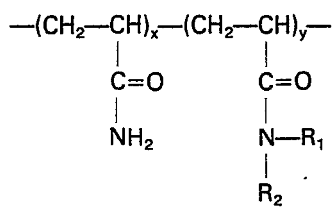

dans laquelle $R_1$, ayant 6 à 22 atomes de carbone, est un groupement alkyle, un groupement cycloalkyle à chaîne droite ou ramifiée, $R_2$ est le groupement alkyle en $C_6$ à $C_{22}$ identique à $R_1$ ou différent, ou un hydrogène, x est 90,0 à 99,9% en moles, et y est 10 à 0,1% en moles.

6. Copolymère selon la revendication 5, dans lequel $R_1$ est un groupement alkyle ayant de 6 à 20 atomes de carbone.

7. Copolymère selon la revendication 6, dans lequel $R_1$ est un groupement alkyle ayant 6 à 18 atomes de carbone.

8. Utilisation du copolymère selon l'une quelconque des revendications 5 à 7 comme agent de diminution de la poussée.

FIG. 1

REDUCED VISCOSITY vs. CONCENTRATION FOR VARIOUS Am/$C_{12}$ COPOLYMERS

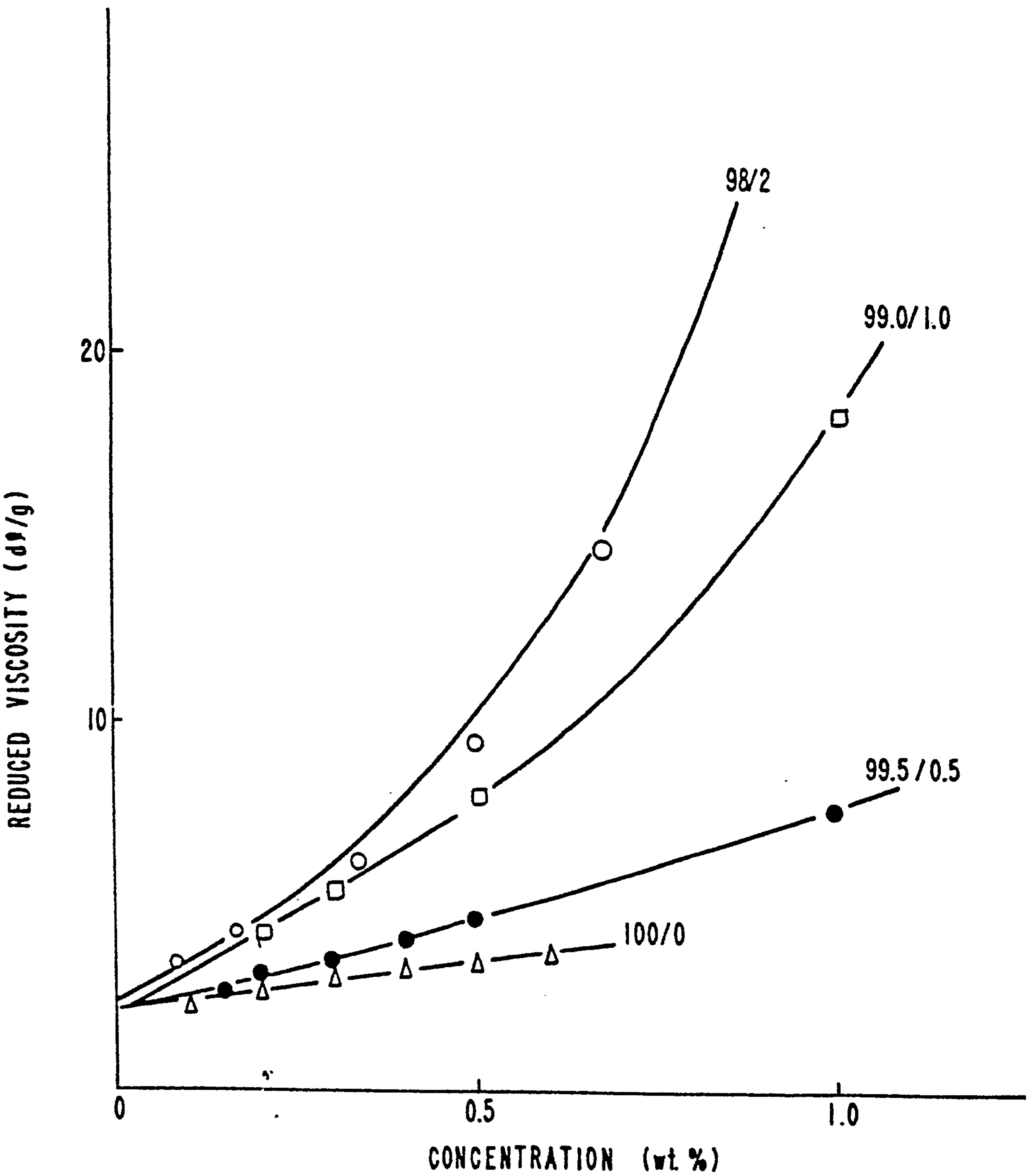

FIG. 2

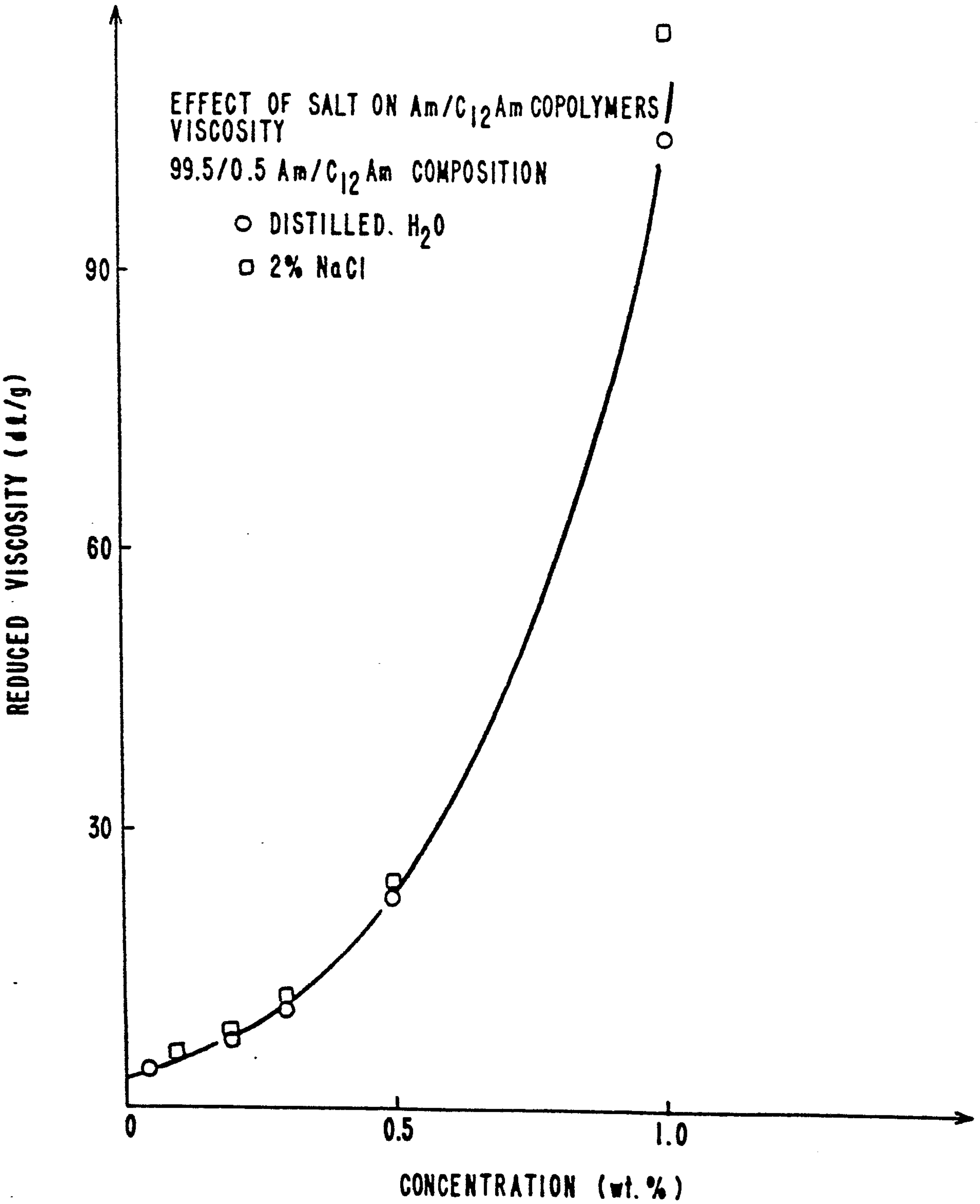
EFFECT OF SALT ON Am/C12Am COPOLYMERS VISCOSITY
99.5/0.5 Am/C12Am COMPOSITION
DISTILLED. H2O
2% NaCl
90
60
30
REDUCED VISCOSITY (dl/g)
0
0.5
1.0
CONCENTRATION (wt.%)

FIG. 3

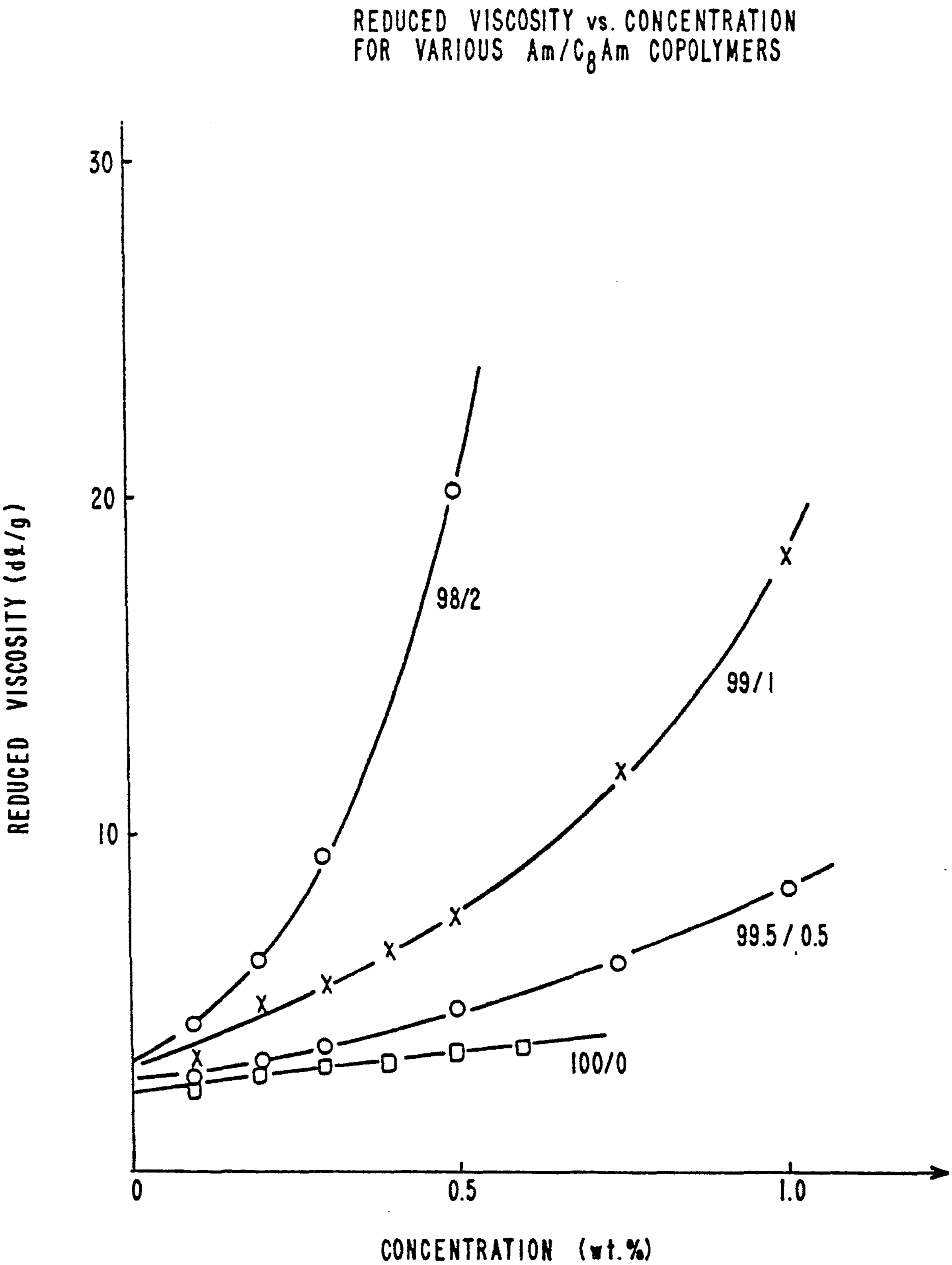
REDUCED VISCOSITY vs. CONCENTRATION
FOR VARIOUS Am/C8Am COPOLYMERS
REDUCED VISCOSITY (dl/g)
30
20
10
98/2
99/1
99.5 / 0.5
100/0
0
0.5
1.0
CONCENTRATION (wt.%)

FIG. 4

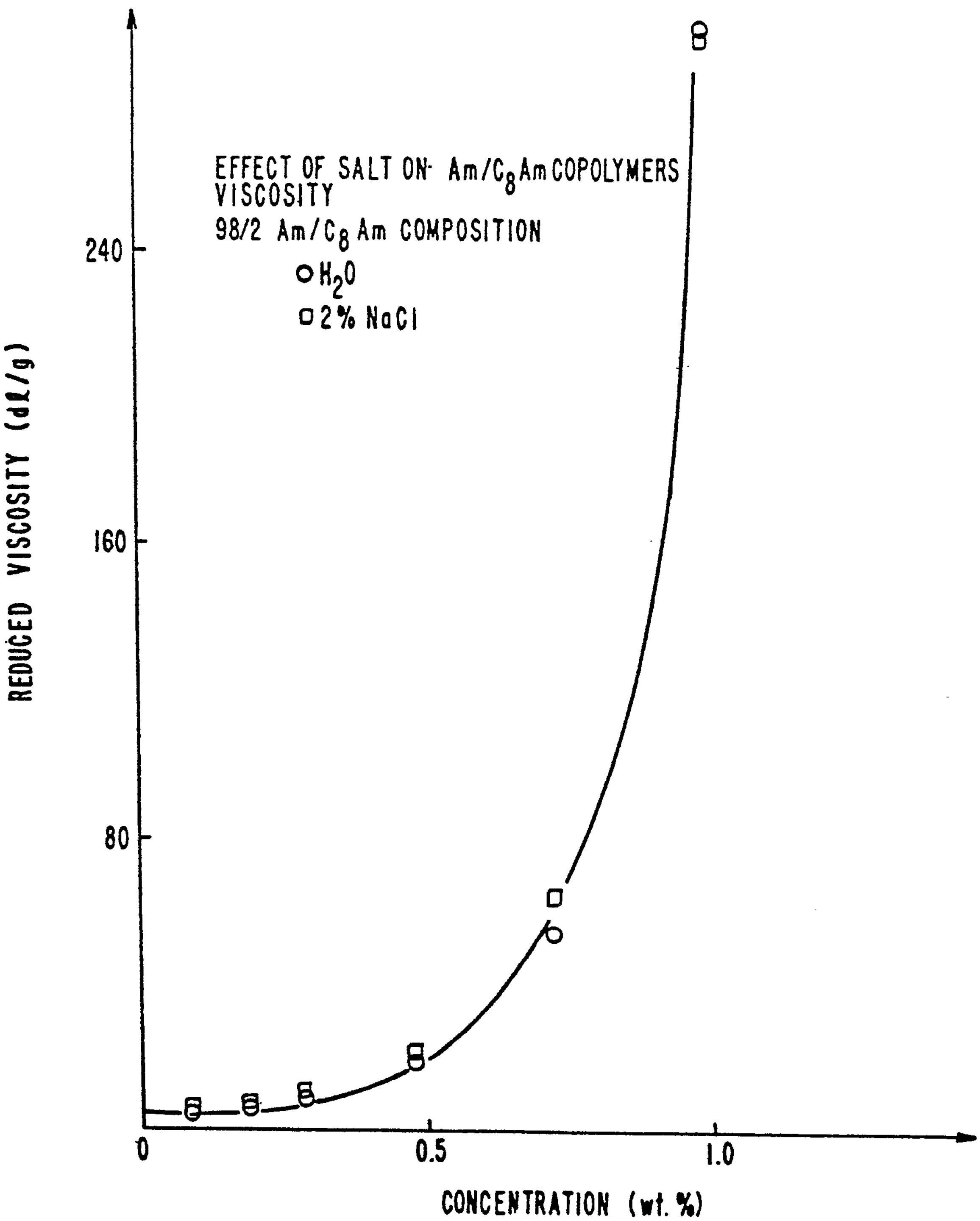
EFFECT OF SALT ON Am/$C_8$Am COPOLYMERS VISCOSITY
98/2 Am/$C_8$ Am COMPOSITION
○ $H_2O$
□ 2% NaCl
REDUCED VISCOSITY (dl/g)
240
160
80
0
0.5
1.0
CONCENTRATION (wt.%)